# EUROPÄISCHE PATENTSCHRIFT

(11) **EP 1 135 245 B1**
(45) Veröffentlichungstag und Bekanntmachung des Hinweises auf die Patenterteilung: **21.06.2006**
(21) Anmeldenummer: 99950425.1
(22) Anmeldetag: 03.11.1999
(51) Int. Cl.: B29C 47/76, B29C 47/42, B29C 47/10, B29K 67/00, B29K 105/26

(54) **VERFAHREN ZUR AUFBEREITUNG EINES THERMOPLASTISCHEN POLYKONDENSATS**
METHOD FOR PROCESSING A THERMOPLASTIC CONDENSATION POLYMER
PROCEDE POUR LE TRAITEMENT D'UN POLYCONDENSAT THERMOPLASTIQUE

(30) Priorität: 26.11.1998 DE 19854689
(43) Veröffentlichungstag der Anmeldung: 26.09.2001
(73) Patentinhaber: Bühler AG, 9240 Uzwil (CH)
(72) Erfinder: GOEDICKE, Franz, CH-9527 Niederhelfenschwil (CH); INNEREBNER, Federico, CH-8004 Zürich (CH)
(74) Vertreter: Frommhold, Joachim
(86) Internationale Anmeldenummer: PCT/CH1999/000515
(87) Internationale Veröffentlichungsnummer: WO 2000/032377

(56) Entgegenhaltungen:
- EP-A- 0 336 520
- EP-A- 0 560 033
- EP-A- 0 588 008
- EP-A- 0 655 320
- EP-A- 0 788 867
- EP-A- 0 861 717
- EP-A- 0 873 844
- EP-A- 0 881 054
- EP-A- 0 995 565
- WO-A-98/40194
- DE-A- 1 595 735
- DE-C- 915 689
- DE-C- 4 001 988
- DE-C- 19 847 103
- JP-A- 60 162 621
- US-A- 3 619 145
- US-A- 3 804 811
- US-A- 4 255 295
- US-A- 4 591 487
- US-A- 4 722 680
- US-A- 5 597 891

## Beschreibung

Die Erfindung betrifft ein Verfahren unter Verwendung eines Extruders zur Aufbereitung eines thermoplastischen Polykondensats. Das erfindungsgemäße Verfahren dient insbesondere zum Rezyklieren thermoplastischer Polykondensate, wie Polyethylen-therephtalat, Polyester oder Polyamid.

Aus DE 42 08 099 A1 ist ein Verfahren und ein Extruder bekannt, bei dem zur Aufbereitung eines thermoplastischen Polykondensats das zerkleinerte Polykondensat einem Extruder im noch festen, nicht geschmolzenen Zustand, zugeführt wird. Bei dem Extruder handelt es sich um einen Zweiwellen-Extruder mit zwei in einem Gehäuse parallel verlaufenden, dichtkämmenden Schnecken. Das noch feste Polykondensat wird in einer ersten Aufbereitungszone auf eine Temperatur unterhalb des Schmelzpunktes erwärmt, so dass niedermolekulare Bestandteile, insbesondere Wasser, über eine im Gehäuse vorgesehene Entgasungsöffnung zumindest teilweise entweichen können. Sodann wird das Polykondensat mittels Knetelementen bearbeitet und aufgeschmolzen. In einer nachfolgenden Verarbeitungszone wird die Polykondensat-Schmelze einem verminderten Druck ausgesetzt, so dass noch in der Schmelze verbliebene niedermolekulare Bestandteile, insbesondere Wasser, zu einem weiteren Anteil über eine Abzugsöffnung entweichen können. Die Polykondensat-Schmelze wird dann einem Mischbehälter zugeführt, in welchem die Schmelze durch Mischwerkzeuge umgewälzt wird. An der sich durch den Mischvorgang ständig erneuernden Oberfläche können die niedermolekularen Bestandteile weiter ausgasen und aus dem Mischbehälter über eine Entgasungsöffnung entweichen.

Bei diesem bekannten Verfahren ist nachteilig, dass die Entgasung und Trocknung des Polykondensats im noch festen Zustand unvollständig ist, da die bei der Erwärmung freiwerdenden niedermolekularen Bestandteile über die Entgasungsöffnung nur unvollständig entweichen, zumal die Entgasungsöffnung nicht beliebig gross dimensioniert werden kann. In der Verarbeitungszone, in welcher das aufzubereitende Polykondensat zur Entgasung und Trocknung auf eine Temperatur unterhalb des Schmelzpunktes erwärmt wird, stellt sich daher ein thermodynamisches Gleichgewicht zwischen der Dampfphase der niedermolekularen Bestandteile und den in dem Polykondensat gebundenen niedermolekularen Bestandteilen ein. Die Effektivität der Entgasung und Trocknung ist aufgrund der begrenzten Entweichung der Dampfphase aus der Entgasungsöffnung eingeschränkt.

Aus der DE 42 31 231 C1 ist ein Mehrwellen-Extruder mit mehreren ringförmig zwischen einem Innengehäuse und einem Aussengehäuse angeordneten Schneckenwellen zur Entgasung einer Polykondensat-Schmelze grundsätzlich bekannt. Bei dem aus dieser Druckschrift hervorgehenden Verfahren wird dem Extruder jedoch das Polykondensat im bereits geschmolzenen Zustand zugeführt und eine Entgasung im noch festen Zustand findet nicht statt. Die Effektivität dieses Verfahrens ist daher ebenfalls begrenzt. Zudem erfolgt die Aufschmelzung des Polykondensats in einer von dem Mehrwellen-Extruder getrennten Vorrichtung, was zu einem erhöhten Aufwand führt. Dieses Verfahren ist daher zum Rezyklieren von thermoplastischen Polykondensaten nur bedingt geeignet.

Die EP 0 336 520 A1 offenbart ein Verfahren zum Aufbereiten eines thermoplastischen Polykondensats, insbesondere in Form zerkleinerter PET-Flaschen, wobei die Teilchen in einer Partikelgrösse von weniger als 2 mm dem Extruder zugeführt werden. Diese kleine Partikelgrösse wird als notwendig betrachtet, um einen allzu grossen IV-Abbau des Polykondensats während der Aufbereitung zu verhindern, indem durch den hohen Zerteilungsgrad des aufzubereitenden Polykondensats und dem dadurch erzielten hohen Oberfläche/Volumen-Verhältnis die Entgasung des Polykondensats erleichtert wird. Insbesondere wird Wasserdampf abgezogen, um die Hydrolyse des Polykondensats und den daraus resultierenden IV-Abbau weitgehend zu vermeiden.

Die EP 0 861 717 A1 bezieht sich auf eine Schnecken-Extrusionsvorrichtung, insbesondere einen Zweiwellen-Extruder, zur Verarbeitung stark ausgasender Materialien, bei denen der Gehalt an flüchtigen Bestandteilen grösser als 10% und im Extremfall bis zu 90% sein kann. Für die grossen anfallenden Gasmengen wird dafür eine Abführung des Gases mittels einer Verzweigung des Gasstroms in mindestens drei Teilströme vorgeschlagen, wobei in jeder der Verzweigungen eine Rückfördereinrichtung für Polykondensat vorgesehen ist.

Die EP 0 788 867 A1 bezieht sich auf einen Ring-Extruder, bei dem mehrere Wellen mit ineinandergreifenden Bearbeitungselementen ringförmig bzw. kranzartig angeordnet sind, so dass innerhalb des Rings bzw. Kranzes und ausserhalb des Rings bzw. Kranzes jeweils ein Bearbeitungsraum bestimmt wird. Um zu verhindern, dass der eine oder der andere dieser Räume mit zu verarbeitendem Material gefüllt und der jeweils andere leer ist, gibt es eine Verbindung zwischen dem kranzinnenseitigen und dem kranzaussenseitigen Raum, um einen Materialdurchtritt von dem einen in den anderen Raum zu ermöglichen. Eine Entgasungsöffnung, die entweder an dem kranzinnenseitigen Raum und/oder an dem kranzaussenseitigen Raum direkt anzubringen wäre, käme daher notwendigerweise mit dem zu entgasenden Material in Kontakt und würde ebenfalls eine Rückfördereinrichtung benötigen, um über die Entgasungsöffnung entweichendes Polykondensat in den Extruder zurück zu fördern.

Der vorliegenden Erfindung liegt die Aufgabe zugrunde, ein Verfahren zur Aufbereitung eines thermoplastischen Polykondensats zu schaffen, bei welchem die Entgasung und/oder Trocknung des Polykondensats im noch festen Zustand verbessert ist.

Diese Aufgabe wird durch das Verfahren gemäss Anspruch 1 gelöst.

Der Erfindung liegt die Erkenntnis zugrunde, dass die Effektivität der Entgasung und/oder Trocknung des Polykondensats im noch festen Zustand dadurch verbessert werden kann, dass das Polykondensat einem verminderten Druck unterhalb des atmosphärischen Drucks unterworfen wird und/oder ein Inertgas zugesetzt wird. Durch die Druckabsenkung wird der Dampfdruck der niedermolekularen Bestandteile vermindert, so dass diese Bestandteile aus dem noch festen Polykondensat erleichtert ausdampfen. Die Zugabe eines Inertgases bewirkt im thermodynamischen Gleichgewicht die Absenkung des Partialdrucks der unerwünschten niedermolekularen Bestandteile, insbesondere der in dem noch festen Polykondensat gebundenen Wasserbestandteile. Aufgrund des verminderten Partialdrucks können diese unerwünschten niedermolekularen Bestandteile ebenfalls erleichtert aus dem Polykondensat ausdampfen. In diesem Zusammenhang ist der Begriff des Inertgases so zu verstehen, dass sich dieses in dem Polykondensat nicht oder nur in geringem Umfang anreichert und die Eigenschaften des Polykondensats nicht in unerwünschter Weise verändert. Die Massnahmen des abgesenkten Drucks und der Zugabe des Inertgases können effektivitätssteigernd auch miteinander kombiniert werden.

Der Erfindung liegt ferner die Erkenntnis zugrunde, dass ein zur Ausführung des vorgenannten Verfahrens geeigneter Extruder gegenüber einem bekannten Extruder so modifiziert werden muss, dass das noch feste Polykondensat über die Entgasungsöffnung nicht entweichen kann. Das Polykondensat wird dem Extruder im festen Zustand in der Regel in Form von Flocken (Flakes) oder Granulat zugeführt, die z. B. aus den rezyklierten Produkten, beispielsweise Einweg-Kunststofflaschen, durch Zerschneiden oder andere Zerkleinerungsverfahren gewonnen werden. Diese Polykondensat-Flocken bzw. das Granulat sind relativ leicht und können an der Entgasungsöffnung, an der für das erfindungsgemäße Verfahren ein verminderter Druck angelegt werden muss beziehungsweise über welche das Inertgas strömt, aufgrund des dort herrschenden Druckgefälles entweichen. Ein an der Entgasungsöffnung angeordnetes Sieb oder Filter würde sich in kurzer Zeit abnutzen und ist deshalb nicht geeignet. Die Erfindung schlägt deshalb vor, bei einem Zweiwellen- oder Mehrwellen Extruder an der Entgasungsöffnung eine Fördervorrichtung vorzusehen, die über die Entgasungsöffnung entweichendes Polykondensat in den Extruder zurückfördert. Diese kann sich an den Schneckenwellen des Extruders selbst reinigen.

Das erfindungsgemäße Verfahren eignet sich zum Rezyklieren von Polyester, insbesondere Polyethylentherephtalat und Polyamid. Das Polykondensat wird in den Extruder in Form von Flocken (Flakes) eingebracht, deren Dicke im Mittel kleiner als 2 mm und deren grösste Ausdehnung im Mittel kleiner als 20 mm ist. Es ist vorteilhaft, das Polykondensat bereits vor dem Einbringen in den Extruder einem Druck unterhalb des atmosphärischen Drucks und/oder dem Inertgas auszusetzen, um die Effektivität des Verfahrens weiter zu steigern. Das Polykondensat kann auch vor dem Einbringen in den Extruder bereits auf eine Temperatur unterhalb der Schmelztemperatur des Polykondensats erwärmt werden.

Nach dem Schmelzen des Polykondensats kann eine weitere Entgasung der Polykondensat-Schmelze erfolgen. Hierbei kann der Polykondensat-Schmelze ein Inertgas, vorzugsweise in kondensierter Form unter einem erhöhten Druck der Polykondensat-Schmelze, zugesetzt werden. Dies führt durch ein Aufschäumen zu einer Vergrösserung der Oberfläche an der Phasengrenze. Das Inertgas vermindert auch hier den Partialdruck der unerwünschten niedermolekularen Bestandteile in der Polykondensat-Schmelze und erleichtert deren Ausgasung. Als Inertgas eignet sich insbesondere Stickstoff, Kohlendioxid oder getrocknete Luft.

Es ist vorteilhaft, wenn die Polykondensat-Schmelze durch mindestens einen Schmelzefilter geführt wird. Schmelzefilter können an die Förderzone des Extruders, in der Nachfolge der Knetelemente oder hinter dem Extruder angeschlossen werden. Der Einsatz von Schmelzefiltern führt dazu, dass die Kunststoffschmelzen von der Weiterverarbeitung eine konstante und hohe Produktqualität besitzen. Schmelze-Partikel mit einer Grösse von 20-50 µm, welche nicht im Bereich der ersten Förderzone, in welcher das Polykondensat noch im festen Zustand vorliegt, ausgeschieden worden sind, können aus dem Schmelzestrom während der Filtration abgetrennt werden. Für die Kunststoffverarbeitung (Polykondensaten wie PA, PET etc.) wird der Drahtgewebefilter verwendet mit geringsten Filterfeinheiten zwischen 5-100 µm.

Die Fördervorrichtungen des bei dem erfindungsgemässen Verfahren verwendeten Extruders können als Förderschnecken, insbesondere als jeweils zwei dichtkämmende Förderschnecken, ausgebildet sein. Es ist vorteilhaft, wenn die Fördervorrichtungen oder das umgebende Gehäuse beheizbar sind. Dadurch wird eine Kondensation der entgasenden niedermolekularen Bestandteile an der Fördervorrichtung und deren Rückförderung in den Extruder verhindert. Gegebenenfalls kann die Entgasungsöffnung auch mit der Einlassöffnung zum Zuführen des Polykondensats in den Extruder zusammenfallen und die dort vorgesehene Fördervorrichtung kann gleichzeitig der dosierten Zuführung des Polykondensats in den Extruder dienen.

Vorzugsweise wird ein Mehrwellen-Extruder zu verwendet, bei welchem zwischen einem Innengehäuse und den ringförmig angeordneten Schneckenwellen ein Innenraum und zwischen einem Aussengehäuse und den Schneckenwellen ein von dem Innenraum getrennter Aussenraum gebildet sind. Das noch feste Polykondensat kann sich dann entweder in dem Innenraum befinden und die Entgasungsöffnung kann mit dem Aussenraum verbunden sein, oder das noch feste Polykondensat kann sich umgekehrt in dem Aussenraum befinden und die Entgasungsöffnung kann mit dem Innenraum verbunden sein. Die miteinander dichtkämmenden Schneckenwellen verhindern in jedem Fall ein Vordringen der festen Polykondensat-Flocken zu der Entgasungsöffnung. Ein Entweichen der Polykondensat-Flocken über die Entgasungsöffnung wird deshalb verhindert.

Es ist ferner vorteilhaft, wenn das Gehäuse im Bereich der ersten Förderzone, in welcher das Polykondensat noch im festen Zustand vorliegt, beheizbar ist, um eine schnelle und gleichmässige Erwärmung des Polykondensats zu gewährleisten.

Die Erfindung wird nachfolgend anhand von Ausführungsbeispielen unter Bezugnahme auf die Zeichnung näher beschrieben. In der Zeichnung zeigen:
- Fig. 1: ein erstes Ausführungsbeispiel eines für das erfindungsgemäße Verfahren verwendeten Extruders in einer Längsdarstellung;
- Fig. 2: ein zweites Ausführungsbeispiel eines für das erfindungsgemäßeverfahren verwendeten Extruders in einer Längsdarstellung;
- Fig. 3: einen Querschnitt durch ein drittes Ausführungsbeispiel eines für das erfindungsgemäße Verfahren verwendeten Extruders;
- Fig. 4: eine geschnittene Halb-Längsdarstellung eines Extruders entsprechend dem in Fig. 3 dargestellten Ausführungsbeispiel; und
- Fig. 5: eine geschnittene Halb-Längsdarstellung eines Extruders entsprechend einem gegenüber Fig. 4 modifizierten Ausführungsbeispiel.

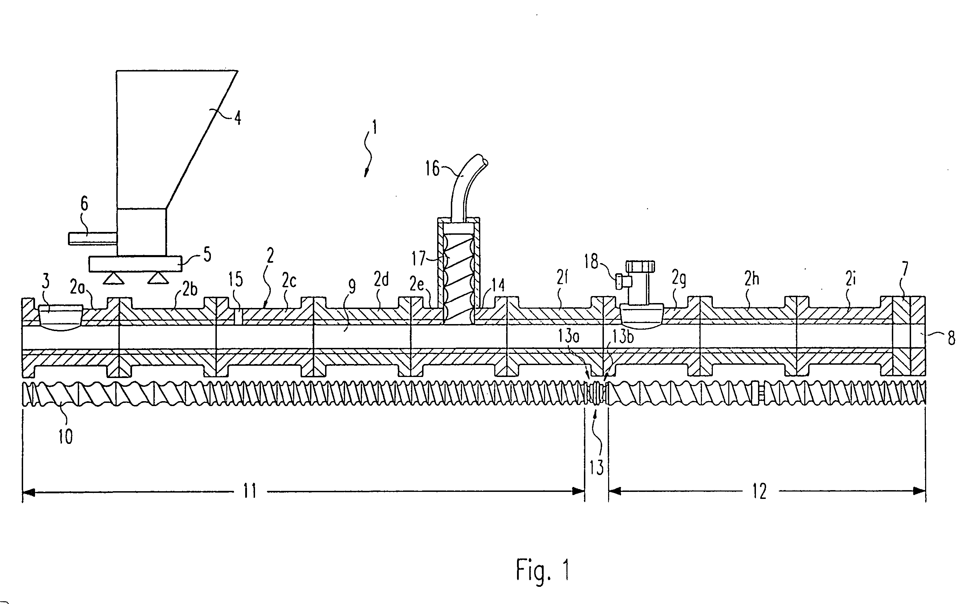

Fig. 1 zeigt ein erstes Ausführungsbeispiel eines erfindungsgemäßverwendbaren Extruders 1. Der in Fig. 1 dargestellte Extruder 1 ist als Zweiwellen-Extruder ausgebildet. Der Extruder 1 umfasst ein Gehäuse 2, das aus mehreren Teilgehäusen 2a - 2i modular aufgebaut ist. Die Teilgehäuse 2a - 2i sind miteinander verflanscht. Das erste Teilgehäuse 2a weist eine Einlassöffnung 3 auf, über welche das aufzubereitende Polykondensat in einem noch festen Zustand in Form von den Flocken (Flakes) dem Extruder 1 zugeführt wird. Das Polykondensat befindet sich in einem Vorratsbehälter 4 und wird über ein Dosiersystem 5 und eine Fördereinrichtung 6 zugemessen. Am Ende des letzten Teilgehäuses 2i befindet sich der Ausgangsflansch 7 mit einer Auslassöffnung 8, an welcher die aufbereitete Polykondensat-Schmelze austritt.

In dem Gehäuse 2 sind zwei versetzt zueinander angeordnete Längsbohrungen vorgesehen, von welchen in Fig. 1 nur eine Bohrung 9 erkennbar ist. In jede der beiden Längsbohrungen ist jeweils eine Schneckenwelle 10 eingesetzt, die in Fig. 1 aus Gründen der verbesserten Darstellung ausserhalb der zugehörigen Längsbohrung 9 gezeichnet ist. Die Schneckenwellen 10 erstrecken sich von der Einlassöffnung 3 bis zu der Auslassöffnung 8. Die beiden Schneckenwellen 10 kämmen dicht miteinander und werden in gleiche Drehrichtung angetrieben.

Die Schneckenwellen 10 gliedern sich grob in eine erste Förderzone 11 zum Fördern des Polykondensats im festen Zustand und eine zweite Förderzone 12 zum Fördern des Polykondensats im geschmolzenen Zustand. Zwischen der ersten Förderzone 11 und der zweiten Förderzone 12 befinden sich Knetelemente 13. Während die Förderschnecke 10 in ihrer ersten Förderzone 11 im Bereich der Einlassöffnung 3 zunächst eine relativ grosse Steigung aufweist, verringert sich die Steigung in Richtung auf die Auslassöffnung 8, wodurch das Polykondensat an der Einlassöffnung 3 retativ rasch eingezogen wird. Die Verweilzeit bzw. das Verweilzeitspektrum des Polykondensats in der ersten Förderzone 11 ist relativ lang, so dass sich das Polykondensat auf eine Temperatur unterhalb des Schmelzpunktes aufheizen kann. Dazu wird das Gehäuse 2 im Bereich der ersten Förderzone 11 durch nicht dargestellte Heizelemente beheizt. Dadurch können niedermolekulare Bestandteile des Polykondensats, insbesondere Wasser, aus dem Polykondensat im noch festen Zustand ausgasen und über eine Entgasungsöffnung 14 entweichen. Um die Effektivität der Ausgasung der niedermolekularen Bestandteile zu verbessern, wird die erste Förderzone 11 des Extruders 1 einem gegenüber dem atmosphärischen Druck verminderten Druck unterworfen oder es wird mit einem Inertgas gespült. Durch die Verminderung des Drucks in dem Gehäuse 2 wird der Dampfdruck der unerwünschten niedermolekularen Bestandteile verringert, so dass diese niedermolekularen Bestandteile erleichtert ausdampfen. Die Zugabe des Inertgases bewirkt eine Verringerung des Partialdrucks dieser niedermolekularen Bestandteile, so dass die Effektivität der Ausgasung ebenfalls verbessert wird. Sofern ein Inertgas verwendet wird, kann dieses über eine Inertgas-Einlassöffnung 15 zugesetzt werden. Als Inertgas eignet sich insbesondere Stickstoff, Kohlendioxid oder getrocknete Luft. Grundsätzlich sind auch Edelgase geeignet. Das über die Entgasungsöffnung 14 entweichende Inertgas kann gefiltert und gereinigt über die Inertgas-Einlassöffnung 15 in einem geschlossenen Kreislauf dem Extruder 1 wieder zugeführt werden.

Zur Erzeugung eines Unterdrucks in den Längsbohrungen 9 bzw. zur Abführung des Inertgases dient eine Leitung 16, die an der Entgasungsöffnung 14 angeschlossen ist. Erfindungsgemäß ist an der Entgasungsöffnung 14 eine als Förderschnecke ausgebildete Fördervorrichtung 17 vorgesehen, um aufgrund des Unterdrucks bzw. des abströmenden Inertgases über die Entgasungsöffnung 14 entweichende Polykondensat-Flocken in den Extruder 1 zurückzufördern und somit zu verhindern, dass Polykondensat-Flocken aus dem Extruder 1 entweichen können. Die Fördervorrichtung 17 kann auch aus zwei dichtkämmenden, nebeneinander angeordneten Förderschnecken zusammengesetzt sein. Es ist vorteilhaft, wenn die Fördervorrichtung 17 beheizbar ist. Dadurch wird eine Kondensation der entgasenden niedermolekularen Bestandteile, insbesondere des Wasserdampfes, an der Fördervorrichtung 17 und somit eine Rückförderung dieser kondensierten Bestandteile in den Extruder 1 vermieden.

Die sich an die erste Förderzone 11 anschliessenden Knetelemente 13 haben sowohl distributive als auch dispersive Eigenschaften und führen zu einer Aufschmelzung des Polykondensats in einem sehr kurz gehaltenen Aufheizungsbereich. Die Aufschmelzung erfolgt in einer Verfahrenslänge von vorzugsweise 1 L/D bis 2 L/D. Vorzugsweise sind die Knetelemente aus fördernden Knetelementen 13a und rückfördernden Knetelementen 13b zusammengesetzt, um das Verweilzeitspektrum der Polykondensate an den Knetelementen 13 zu erhöhen und somit den Aufschmelzbereich kurz zu halten. Die Polykondensate werden bereits in der ersten Förderzone 11 durch Beheizen des Gehäuses 2 möglichst nahe auf die Aufschmelztemperatur aufgeheizt, so dass die von den Knetelementen 13 auf die Polykondensate zu übertragende Aufschmelzenthalpie gering ist.

In der sich an die Knetelemente anschliessenden zweiten Förderzone 12 wird die Polykondensat-Schmelze in Richtung auf die Auslassöffnung 8 gefördert. Auch hier verringert sich die Steigung der Schneckenwellen 10 in Richtung auf die Auslassöffnung 8. Vorzugsweise erfolgt in diesem Bereich eine weitere Entgasung der Polykondensat-Schmelze. Die Entgasung kann auch hier durch eine Verringerung des Arbeitsdrucks oder bzw. zusätzlich durch die Zugabe eines Inertgases, insbesondere von Stickstoff, erfolgen. Vorzugsweise erfolgt die Zugabe des Inertgases in einem kondensierten Zustand, wobei die Polykondensat-Schmelze bei der Zugabe einem erhöhten Druck unterworfen ist. Bei einer nachfolgenden Druckverminderung der Polykondensat-Schmelze gasen das Inertgas sowie die unerwünschten niedermolekularen Bestandteile aus der Polykondensat-Schmelze aus und können über eine weitere Entgasungsöffnung 18 austreten.

Es ist vorteilhaft, das Polykondensat in dem Vorratsbehälter 4 bereits einer InertgasAtmosphäre und/oder einem verminderten Druck auszusetzen sowie einer erhöhten Temperatur zu unterwerfen, um die Effektivität des Verfahrens zu steigern und die Aufwärmzeit in der ersten Förderzone 11 zu verringern.

Die Knetelemente befinden sich vorzugsweise am Ende eines Teilgehäuses 2f. Dies hat den Vorteil, dass die Schmelzzone am Ende des Teilgehäuses 2f liegt, so dass die Weiterverarbeitung in dem sich daran anschliessenden Teilgehäuse 2g optimal konfiguriert werden kann.

Das erfindungsgemäße Verfahren ist auch für eine reaktive Extrusion nach dem Reaktionsprinzip der Polyaddition mit Hilfe von Additiven und/oder Polykondensation geeignet. Dabei werden die Additive bei der Aufschmelzung durch die Knetelemente 13 gleichzeitig optimal gemischt. Eine gegebenenfalls nötige Erhöhung des Verweilzeitspektrums wird vorzugsweise durch Zahnelemente realisiert. Auch die Einarbeitung von Zuschlagsstoffen, insbesondere von Glas oder Pigmenten, ist möglich. Diese Stoffe werden vorzugsweise kurz nach der Aufschmelzung eindosiert und mit schmalen Knetelementen unmittelbar nach der Aufschmelzung eingearbeitet.

Entsprechend dem Patentanspruch 17 eignen sich als Zuschlagsstoffe (Zusatzstoffe, Farbpigmente, Füllstoffe, Verarbeitungshilfsmittel, Stabilisatoren, reaktive Substanzen usw.), die neben dem Polykondensat in den Extruder eingebracht werden. Durch Einsatz von Zuschlagsstoffen wird gewährleistet, dass eine konstante Schmelzviskosität der Polykondensat-Schmelze erreicht wird.

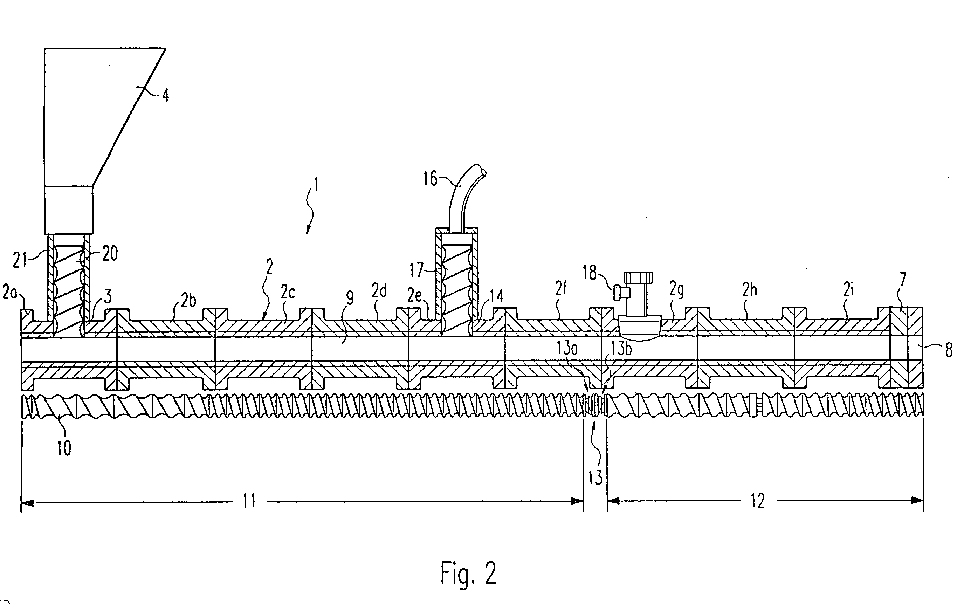

Fig. 2 zeigt ein gegenüber Fig. 1 modifiziertes Ausführungsbeispiel eines erfindungsgemäßen Extruders 1. Bereits anhand von Fig. 1 beschriebene Elemente sind mit übereinstimmenden Bezugszeichen versehen, so dass sich insoweit eine wiederholende Beschreibung erübrigt.

Der Unterschied des in Fig. 2 dargestellten Ausführungsbeispiels gegenüber dem anhand von Fig. 1 bereits beschriebenen Ausführungsbeispiel besteht darin, dass das Polykondensat im festen Zustand von dem Vorratsbehälter 4 über eine als Förderschnecke bzw. als zwei dichtkämmende Förderschnecken ausgebildete Fördervorrichtung 20 der Einlassöffnung 3 des Extruders 1 zugeführt wird. Über den Stutzen 21 kann gleichzeitig das Inertgas zugeführt werden, wobei das in dem Vorratsbehälter 4 bevorratete Polykondensat bereits vor der Zuführung in den Extruder unter einer InertgasAtmosphäre gehalten wird.

Umgekehrt ist es auch möglich, das Inertgas über den Stutzen 21 und den Vorratsbehälter 4 abzuführen, wobei dann die Fördervorrichtung 20 gegen die Strömungsrichtung des Inertgases fördert. Die Fördervorrichtung 17 und die Entgasungsöffnung 14 können dann auch entfallen. Gleiches gilt, wenn nicht mit einem Inertgas gespült wird, sondern der Extruder 1 in dem ersten Förderbereich 11 auf einem Unterdruck gehalten wird. Der dafür notwendige Vakuumanschluss kann unmittelbar an dem Vorratsbehälter 4 vorgesehen sein, wobei das Polykondensat in den Vorratsbehälter 4 über eine geeignete Vakuumschleuse eingeschleust wird. Auch hier kann die Einlassöffnung 3 gleichzeitig als Entgasungsöffnung dienen und die Fördervorrichtung 17 kann entfallen. Wenn die Inertgas-Einlassöffnung 15 in der Nähe der Knetelemente 13 angeordnet ist, hat dies den Vorteil, dass die Strömungsrichtung in dem Extruder 1 entgegen der Förderrichtung verläuft und deshalb die Spülung besonders effektiv ist.

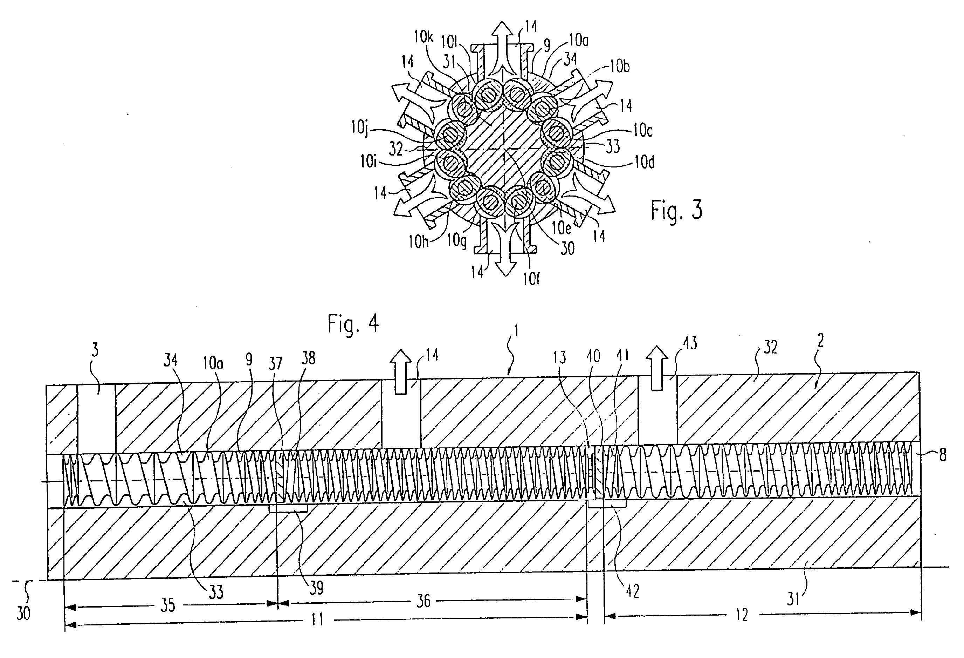

Die Fig. 3 und 4 zeigen einen vollkommen anders konfigurierten Extruder 1, der ebenfalls zur Durchführung des erfindungsgemäßen Verfahrens geeignet ist. Dabei zeigt Fig. 3 einen Querschnitt durch den Extruder 1 und Fig. 4 einen halben Längsschnitt bis zur Mittelachse 30. Bereits beschriebene Elemente sind mit übereinstimmenden Bezugszeichen bezeichnet.

Im Gegensatz zu den in Fig. 1 und 2 dargestellten Zweiwellen-Extrudern handelt es sich bei dem in den Fig. 3 und 4 dargestellten Extruder 1 um einen Mehrwellen-Extruder, bei welchem mehrere, im Ausführungsbeispiel zwölf, Schneckenwellen 10a - 10l ringförmig zwischen einem Innengehäuse 31 und einem Aussengehäuse 32 angeordnet sind. Die Schneckenwellen 10a - 10l sind auch bei dem in den Fig. 3 und 4 dargestellten Mehrwellen-Extruder dichtkämmend ausgebildet, so dass die ringförmig angeordneten Schneckenwellen 10a - 101 einen zwischen dem Innengehäuse 31 und den Schnekkenwellen 10a - 101 ausgebildeten Innenraum 33 von einem zwischen dem Aussengehäuse 32 und den Schneckenwellen 10a - 10l gebildeten Aussenraum 34 trennen. In einem noch näher zu beschreibenden Teilbereich der ersten Förderzone 11 des Extruders 1, in welcher das Polykondensat im festen Zustand gefördert wird, befindet sich das Polykondensat in dem Innenraum 33, was in der Zeichnung durch eine Kreuzschraffur angedeutet ist. Der Aussenraum 34 hingegen ist im Ausführungsbeispiel mit mehreren Entgasungsöffnungen 14 verbunden, über welche ausdampfende niedermolekulare Bestandteile des aufzubereitenden Polykondensats entweichen können.

In der ersten Förderzone 11, in welcher das Polykondensat im festen Zustand vorliegt, wird das Gehäuse 2, besonders das Innengehäuse 31, beheizt, um das Polykondensat möglichst bis kurz unterhalb des Schmelzpunktes aufzuheizen und so eine effektive Ausgasung der niedermolekularen Bestandteile zu bewirken. Zusätzlich wird entsprechend dem bereits beschriebenen erfindungsgemäßen Verfahren über die Entgasungsöffnungen 14 entweder ein Unterdruck in dem Extruder 1 erzeugt und/oder es wird ein Inertgas, insbesondere Stickstoff, zu Spülzwecken zugesetzt. Das Inertgas kann dabei über nicht dargestellte Inertgas-Einlassöffnungen in den Innenraum 33, in dem sich das Polykondensat befindet, eintreten, zwischen den dichtkämmenden Schneckenwellen 10a - 10l hindurchtreten und über die Entgasungsöffnungen 14 entweichen, was durch entsprechende Pfeile veranschaulicht ist.

Wesentlich ist, dass bei dieser Konfiguration Förderelemente an den Entgasungsöffnungen 14 nicht notwendig sind, weil das Polykondensat bereits über die dichtkämmenden Schneckenwellen 10a - 101 an einem Austritt aus den Entgasungsöffnungen 14 gehindert ist.

Dennoch kann bei Bedarf eine Förderrichtung 17 an bzw. in der Eingangsöffnung 14 vorgesehen sein.

Die Konfiguration der Schneckenwellen 10a - 10l wird aus dem in Fig. 4 dargestellten Halb-Längsschnitt besser ersichtlich. Dargestellt ist eine Schneckenwelle 10a in der zugehörigen Längsbohrung 9, die zwischen dem Innengehäuse 31 und dem Aussengehäuse 32 ausgebildet ist. Dabei sind der zwischen der Schneckenwelle 10a und dem Innengehäuse 31 gebildete Innenraum 33 und der zwischen der Schneckenwelle 10a und dem Aussengehäuse 32 gebildete Aussenraum 34 ebenfalls erkennbar. Das zu verarbeitende Polykondensat wird dem Extruder 1 über eine oder mehrere Einlassöffnungen 3 im festen Zustand in Form von den Flocken (Flakes), zugeführt. Die Schneckenwellen 10a - 10l gliedern sich grob in eine erste Förderzone 11, in welcher das Polykondensat im festen Zustand gefördert wird, und eine zweite Förderzone 12, in welcher die Polykondensat-Schmelze gefördert wird. Zwischen der ersten Förderzone 11 und der zweiten Förderzone 12 befinden sich Knetelemente 13 zum Aufschmelzen des Polykondensats.

Die erste Förderzone 11 ist in eine Einzugszone 35 und in eine Entgasungszone 36 unterteilt. In der Einzugszone 35 wird das Polykondensat eingezogen, wobei sich das Polykondensat im wesentlichen gleichmässig in dem Innenraum 33 und dem Aussenraum 34 verteilt. Am Ende der Einzugszone 35 befindet sich eine erste Sperre bestehend aus einem nach einem Distanzring 37 angeordneten rückförderndem Abschnitt 38. An dem Innengehäuse 31, nicht jedoch an dem Aussengehäuse 32, ist eine Nut 39 vorgesehen, die über den rückfördernden Bereich 38 hinwegreicht. Das Polykondensat kann deshalb nur im Bereich des Innenraums 33 von der Einzugszone 35 in die Entgasungszone 36 übertreten, so dass sichergestellt ist, dass sich das Polykondensat in der Entgasungszone 36 praktisch ausschliesslich in dem Innenraum 33 befindet. Das Gehäuse 2 ist im Bereich der ersten Zone 11 beheizt, so dass das Polykondensat bis kurz unterhalb der Schmelztemperatur aufgeheizt wird. Gleichzeitig wird ein Unterdruck erzeugt und/oder es wird mit einem Inertgas gespült. Auf diese Weise wird eine wirkungsvolle Entgasung erreicht. Am Ende der Entgasungszone 36 befinden sich Knetelemente 13, die distributive und dispersive Eigenschaften haben. Das Polykondensat wird in diesem Bereich sehr schnell aufgeschmolzen und liegt nachfolgend als Schmelze vor.

Durch eine aus einem nach einem Distanzring 40 angeordneten rückfördernden Abschnitt 41 bestehende zweite Sperre wird in Verbindung mit einer an dem Innengehäuse 31 vorgesehenen Nut 42 gewährleistet, dass sich die Polykondensat-Schmelze bevorzugt in dem Innenraum 33 befindet. In dem Aussenraum 34 mündet eine zweite Entgasungsöffnung 43, die eine zusätzliche Entgasung der Polykondensat-Schmelze ermöglicht. Die Schmelze verteilt sich relativ gleichmässig an der Oberfläche der Schnekkenwellen 10a - 10l, wobei durch die dichtkämmenden Schneckenwellen 10a - 10l ein stetiges neues Ausstreichen der Schmelzen erfolgt, wodurch ständig neue Oberflächen erzeugt werden. Dadurch wird der Entgasungsvorgang wesentlich beschleunigt. Der Entgasungsvorgang kann begünstigt werden, indem an der Entgasungsöffnung 43 ein Unterdruck angelegt wird, um den Dampfdruck der niedermolekularen Bestandteile, insbesondere des Wasseranteils, zu verringern.

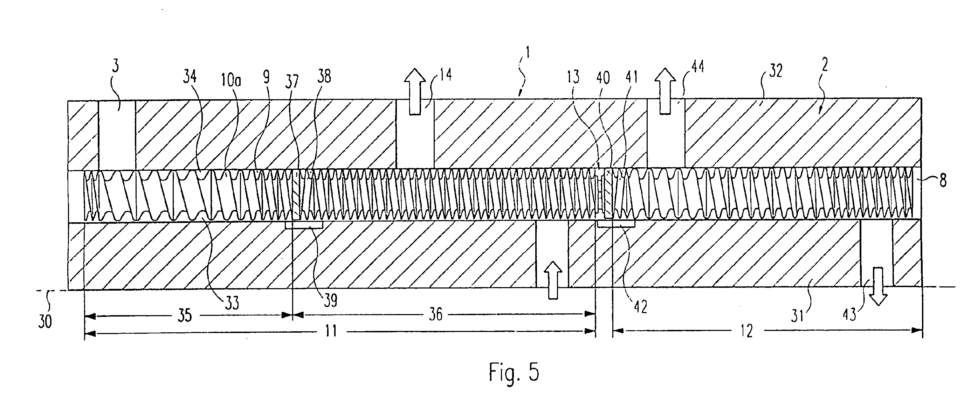

In Fig. 5 ist eine Variation des in den Fig. 3 und 4 dargestellten Ausführungsbeispiels dargestellt. Dabei zeigt Fig. 5, ähnlich wie Fig. 4, einen Halb-Längsschnitt durch einen als Mehrwellen-Extruder ausgebildeten Extruder 1.

Der Unterschied zu dem in Fig. 4 dargestellten Ausführungsbeispiel besteht darin, dass über eine Inertgas-Einlassöffnung 44 der Polykondensat-Schmelze ein Inertgas in vorzugsweise kondensierter Form zugesetzt wird. Sowohl das Inertgas als auch die unerwünschten niedermolekularen Bestandteile des aufzubereitenden Polykondensats, insbesondere der noch verbliebene Wasseranteil, verlassen den Extruder 1 über die Entgasungsöffnung 43. Es kann günstiger sein, das Inertgas über die Öffnung 43 zuzuführen und über die Öffnung 44 abzulassen.

Die Erfindung ist nicht auf die dargestellten Ausführungsbeispiele beschränkt. Insbesondere kann der in Fig. 3 bis 5 dargestellte Mehrwellen-Extruder auch so konfiguriert werden, dass in der Entgasungszone 36 sich das Polykondensat in dem Aussenraum 34 befindet und die Entgasungsöffnungen 14 mit dem Innenraum 33 verbunden sind. Dazu ist die Nut 39 nicht an dem Innengehäuse 31, sondern an dem Aussengehäuse 32 auszubilden.

Ferner ist der dargestellte Mehrwellen-Extruder nicht auf die in Fig. 3 nur beispielsweise dargestellten Zwölf-Schneckenwelle beschränkt.

## Patentansprüche

1. Verfahren zur Aufbereitung eines thermoplastischen Polykondensats mit folgenden Verfahrensschritten:
- Einbringen des Polykondensats in einem festen Zustand in Form von Flocken in einen Extruder mit:
- in einem Gehäuse angeordneten Schneckenwellen (10), die sich von einer Einlassöffnung (3) in Richtung zu einer Auslassöffnung (8) erstrecken,
- einer ersten Förderzone (11) zum Fördern des Polykondensats im festen Zustand,
- einer zweiten Förderzone (12) zum Fördern des Polykondensats im geschmolzenem Zustand,
- und zumindest einer im Bereich der ersten Förderzone (11) in dem Gehäuse vorgesehenen Entgasungsöffnung (14),
- Erwärmen des Polykondensats auf eine Temperatur unterhalb des Schmelzpunktes und Entgasen und/oder Trocknen des Polykondensats im festen Zustand bei einem Druck unterhalb des atmosphärischen Drucks,
- Schmelzen des Polykondensats zwischen der ersten Förderzone (11) und der zweiten Förderzone (12)
**dadurch gekennzeichnet, dass** die Schneckenwellen (10) des Extruders dichtkämmend sind; dass das Entweichen von Polykondensat-Flocken aus dem Extruder (1) mittels einer an der Entgasungsöffnung (14) vorgesehenen, als Förderschnecke ausgebildeten ersten Fördervorrichtung (17) verhindert wird, dass das Polykondensat in den Extruder (1) in Form von Flocken mittels einer weiteren Fördervorrichtung (5, 6; 20) dosiert eingebracht wird, wobei die Dicke der Flocken im Mittel kleiner als 2 mm und größten Ausdehnung kleiner als 20 mm ist.

2. Verfahren nach Anspruch 1, **dadurch gekennzeichnet, dass** das Aufschmelzen des Polykondensats zwischen der ersten Förderzone (11) und der zweiten Förderzone (12) mittels Knetelementen (13) erfolgt.

3. Verfahren nach Anspruch 1 oder 2, **dadurch gekennzeichnet, dass** das Entgasen und/oder Trocknen des Polykondensates unter Zugabe eines Inertgases erfolgt.

4. Verfahren nach einem der Ansprüche 1 bis 3, **dadurch gekennzeichnet, dass** es sich bei dem thermoplastischen Polykondensat um Polyester, insbesondere Polyethylentheraphtalat, oder Polyamid handelt.

5. Verfahren nach einem der Ansprüche 1 bis 4, **dadurch gekennzeichnet, dass** das Polykondensat im festen Zustand mit dem Inertgas gespült wird.

6. Verfahren nach einem der Ansprüche 1 bis 5, **dadurch gekennzeichnet, dass** das Polykondensat bereits vor dem Einbringen in den Extruder (1) auf einem Druck unterhalb des atmosphärischen Drucks und/oder dem Inertgas ausgesetzt wird.

7. Verfahren nach einem der Ansprüche 1 bis 6, **dadurch gekennzeichnet, dass** das Polykondensat bereits vor dem Einbringen in den Extruder (1) auf eine Temperatur unterhalb der Schmelztemperatur des Polykondensats erwärmt wird.

8. Verfahren nach einem der Ansprüche 1 bis 7, **dadurch gekennzeichnet, dass** das Inertgas bei einer Temperatur von 60°C bis 250°C, vorzugsweise 100°C bis 160°C, zugegeben ist.

9. Verfahren nach einem der Ansprüche 1 bis 8, **dadurch gekennzeichnet, dass** nach dem Schmelzen des Polykondensats eine weitere Entgasung der Polykondensat-Schmelze erfolgt.

10. Verfahren nach einem der Ansprüche 9, **dadurch gekennzeichnet, dass** die Entgasung der Polykondensat-Schmelze unter vorhergehender Zugabe eines Inertgases erfolgt.

11. Verfahren nach Anspruch 10, **dadurch gekennzeichnet, dass** das Inertgas in einem kondensierten Zustand der Polykondensat-Schmelze unter einem erhöhten Druck zugesetzt wird und nachfolgend der Druck der Polykondensat-Schmelze abgesenkt wird, so dass das Inertgas aus der Polykondensat-Schmelze entweicht.

12. Verfahren nach einem der Ansprüche 3 bis 11, **dadurch gekennzeichnet, dass** es sich bei dem Inertgas um Stickstoff, getrocknete Luft, Kohlendioxid oder ein Edelgas handelt.

13. Verfahren nach einem der Ansprüche 9 bis 11, **dadurch gekennzeichnet, dass** die Polykondensat-Schmelze durch mindestens eine Schmelzepumpe geführt wird.

14. Verfahren nach einem der Ansprüche 9 bis 11 oder nach Anspruch 13, **dadurch gekennzeichnet, dass** die Polykondensat-Schmelze durch mindestens einen Schmelzefilter geführt wird.

15. Verfahren nach Anspruch 14, **dadurch gekennzeichnet, dass** der Einsatz von Schmelzefiltern in Förderrichtung des Polykondensats, nach Aufschmelzung des Polykondensates, vorzugsweise hinter dem Extruder erfolgt.

16. Verfahren nach Anspruch 14 oder 15, **dadurch gekennzeichnet, dass** in der Nachfolge des Schmelzefilters eine weitere Entgasung des Poykondensates erfolgt.

17. Verfahren nach einem der Ansprüche 1 bis 16, **dadurch gekennzeichnet, dass** Zusatzstoffe, wie Farbpigmente, Füllstoffe, Verarbeitungshilfsmittel, Stabilisatoren, mit dem Polykondensat reagierende Substanzen und dgl., neben dem Polykondensat in den Extruder (1) eingebracht werden.

18. Verfahren nach Anspruch 17, **dadurch gekennzeichnet, dass** die Schmelzviskosität und/oder Schmelzfestigkeit der Polykondensat-Schmelze durch den Einsatz einer mit dem Polykondensat reagierender Substanz modifiziert wird.

19. Verfahren nach Anspruch 18, **dadurch gekennzeichnet, dass** die mit dem Polykondensat reagierende Substanz durch eine kettenverlängernde und/oder kettenvernetzende Reaktion mit dem Polykondensat die Schmelzeviskosität und/oder Schmelzefestigkeit des Polykondensates erhöht.

20. Verfahren nach einem der vorhergehenden Ansprüche, **dadurch gekennzeichnet, dass** eine weitere Polykondensation der Polykondensatschmelze im Vakuum erfolgt.

21. Verfahren nach einem der Ansprüche 1 bis 20, **dadurch gekennzeichnet, dass** ein Extruder verwendet wird mit einer Einlassöffnung (3) zur Einbringung des aufzubereitenden Polykondensat im festen Zustand, einer Auslassöffnung (8) zur Abgabe des Polykondensats im geschmolzenen Zustand mehr als zwei in dem Gehäuse (2) angeordneten, dichtkämmenden Schneckenwellen (10), wobei an der Entgasungsöffnung (14) die erste Fördervorrichtung (17) vorgesehen ist, die zumindest eine Förderschnecke umfasst, um über die Entgasungsöffnung (14) entweichbares Polykondensat in den Extruder (1) zurück zu fördern, und wobei das Gehäuse (2) im Bereich der ersten Förderzone (11) beheizbar ist und wobei das Gehäuse (2) in ein Innengehäuse (31) und ein Aussengehäuse (32) gegliedert ist und die Schneckenwellen (10a - 10l) zwischen dem Innengehäuse (31) und dem Aussengehäuse (32) ringförmig angeordnet sind, wobei die Schneckenwellen (10a - 101) einen zwischen dem Aussengehäuse (32) und den Schneckenwellen gebildeten Aussenraum (34) von einem zwischen dem Innengehäuse (31) und den Schneckenwellen gebildeten Innenraum (33) trennen, und wobei sich im Bereich der ersten Förderzone (11) das Polykondensat während seiner Aufbereitung entweder in dem Innenraum (33) befindet und die Entgasungsöffnung (14) mit dem Aussenraum (34) verbunden ist oder sich das Polykondensat während seiner Aufbereitung in dem Aussenraum (34) befindet und die Entgasungsöffnung (14) mit dem Innenraum (33) verbunden ist, und wobei das Polykondensat mittels einer an der Einlassöffnung (3) vorgesehenen Fördervorrichtung (20) dosiert in den Extruder (1) eingebracht wird.

22. Verfahren nach Anspruch 21, **dadurch gekennzeichnet, dass** die Fördervorrichtung (17) zwei oder mehrere dichtkämmenden Förderschnecken aufweist.

23. Verfahren nach Anspruch 21 oder 22, **dadurch gekennzeichnet, dass** die Fördervorrichtung (17) und/oder das die Fördervorrichtung (17) umgebende Gehäuse beheizt wird bzw. werden.

24. Verfahren nach einem der Ansprüche 21 bis 23, **dadurch gekennzeichnet, dass** die Einlassöffnung (3) gleichzeitig als Entgasungsöffnung (14) verwendet wird.

25. Verfahren nach einem der Ansprüche 21 bis 24, **dadurch gekennzeichnet, dass** die Entgasungsöffnung (14) mit einem Unterdruck beaufschlagt wird und/oder über die Entgasungsöffnung (14) ein Spülzwecken dienendes Inertgas abgeführt wird.

26. Verfahren nach Anspruch 25, **dadurch gekennzeichnet, dass** das Gehäuse (2) im Bereich der ersten Förderzone (11) zumindest eine Öffnung (15, 44) aufweist, über die Intertgas zugeführt wird.

27. Verfahren nach einem der Ansprüche 21 bis 26, **dadurch gekennzeichnet, dass** die verwendeten Knetelemente (13) eine Gesamtlänge L haben, wobei das Verhältnis UD der Gesamtlänge L der Knetelemente (13) zu dem Durchmesser D der Schneckenwellen zwischen 1 und 2 liegt.

## Claims

1. A method for processing a thermoplastic polycondensate with the following procedural steps:
- Incorporating the polycondensate in a solid state in the form of flakes into an extruder with:
- screw shanks (10) arranged in a casing, which extend from an inlet opening (3) in the direction toward an outlet opening (8);
- a first conveying zone (11) for conveying the polycondensate in a solid state;
- a second conveying zone (12) for conveying the polycondensate in a melted state; and
- at least one degassing opening (14) provided in the area of the first conveying zone (11) in the casing.
- Heating the polycondensate to a temperature under the melting point and degassing and/or drying the polycondensate in a solid state at a pressure of below atmospheric pressure;
- Melting the polycondensate between the first conveying zone (11) and the second conveying zone (12);
**characterized in that** the screw shanks (10) of the extruder are tightly intermeshing; that the polycondensate flakes are prevented from escaping the extruder (1) by means of a first conveying device (17) provided at the degassing opening (17) and designed as a conveying screw, that the polycondensate in the extruder (1) can be metered in as flakes by means of another conveying device (5, 6; 20), wherein the flakes average less than 2 mm in thickness, expanding at most to less than 20 mm.

2. The method according to claim 1, **characterized in that** the polycondensate is melted between the first conveying zone (11) and the second conveying zone (12) using kneading elements (13).

3. The method according to claim 1 or 2, **characterized in that** the polycondensate is degassed and/or dried with the addition of an inert gas.

4. The method according to one of claims 1 to 3, **characterized in that** the thermoplastic polycondensate is a polyester, in particular polyethylene terephthalate, or polyamide.

5. The method according to one of claims 1 to 4, **characterized in that** polycondensate is rinsed with the insert gas in a solid state.

6. The method according to one of claims 1 to 5, **characterized in that** the polycondensate is already exposed to a pressure below the atmospheric pressure and/or the inert gas before introduced into the extruder (1).

7. The method according to one of claims 1 to 6, **characterized in that** the polycondensate is already heated to a temperature below the melting point of the polycondensate before introduced into the extruder (1).

8. The method according to one of claims 1 to 7, **characterized in that** the inert gas is added at a temperature of 60°c to 250°C, preferably 100°C to 160°C.

9. The method according to one of claims 1 to 8, **characterized in that** the polycondensate melt is further degassed after the polycondensate has been melted.

10. The method according to one of claims 9, **characterized in that** an inert gas is first added before degassing the polycondensate.

11. The method according to claim 10, **characterized in that** the polycondensate melt is introduced in the condensed state under an elevated pressure, after which the pressure of the polycondensate melt is lowered, so that the inert gas escapes from the polycondensate melt.

12. The method according to one of claims 3 to 11, **characterized in that** the inert gas is nitrogen, dried air, carbon dioxide or a noble gas.

13. The method according to one of claims 9 to 11, **characterized in that** the polycondensate melt is passed through at least one melt pump.

14. The method according to one of claims 9 to 11 or according to claim 13, **characterized in that** the polycondensate melt is passed through at least one melt filter.

15. The method according to claim 14, **characterized in that** melt filters are used in the conveying direction of the polycondensate after the polycondensate has been melted, preferably behind the extruder.

16. The method according to claim 14 or 15, **characterized in that** the polycondensate is subjected to further degassing after the melt filter.

17. The method according to one of claims 1 to 16, **characterized in that** additives, such as dye pigments, fillers, processing aids, stabilizers, substances that react with polycondensate, etc., are introduced into the extruder (1) in addition to the polycondensate.

18. The method according to claim 17, **characterized in that** the melt viscosity and/or melt elasticity of the polycondensate melt is modified by using a substance that reacts with the polycondensate.

19. The method according to claim 18, **characterized in that** the ' substance that reacts with the polycondensate increases the melt viscosity and/or melt elasticity of the polycondensate as the result of a chain-lengthening and/or chain-crosslinking reaction with the polycondensate.

20. A method according to one of the preceding claims, **characterized in that** further polycondensation of the polycondensation melt takes place under a vacuum.

21. The method according to one of claims 1 to 20, **characterized in that** an extruder is used with an inlet opening (3) for incorporating the polycondensate to be prepared in a solid state, an outlet opening (8) for discharging the polycondensate in a melted state, more than two tightly intermeshing screw shanks (10) arranged in the casing (2), wherein the degassing opening (14) is the location of the first conveying device (17), which encompasses at least one conveying screw, in order to convey the polycondensate that can escape via the degassing opening (14) back into the extruder (1), and wherein the casing (2) is divided into an inner casing (31) and an outer casing (32), and the screw shanks (10a-10l) are annularly arranged between the inner casing (31) and the outer casing (32), wherein the screw shanks (10a-10l) separate an outer space (34) formed between the outer casing (32) and the screw shanks from an inner space (33) formed between the inner casing (31) and the screw shanks, and, in the first conveying zone (1), the polycondensate is processed while located either in the inner space (33) and the degassing opening (14) is connected with the outer space (34), or the polycondensate is processed while located in the outer space (34) and the degassing opening (14) is connected with the inner space (33), and wherein the polycondensate is metered into the extruder (1) by means of a conveying device (20) located at the inlet opening (3).

22. The method according to claim 21, **characterized in that** the conveying device (17) has two or more tightly intermeshing conveying screws.

23. The method according to claim 21 or 22, **characterized in that** the conveying device (17) and/or the casings enveloping the conveying device (17) is/are heated.

24. The method according to one of claims 21 to 23, **characterized in that** the inlet opening (3) is simultaneously used as a degassing opening (14).

25. The method according to one of claims 21 to 24, **characterized in that** the degassing opening (14) is placed under a vacuum and/or an inert gas with a rinsing function is discharged via the degassing opening (14).

26. The method according to claim 25, **characterized in that** the casing (2) has at least one opening (15, 44) in the area of the first conveying zone (11) via which the inert gas is supplied.

27. The method according to one of claims 21 to 26, **characterized in that** the used kneading elements (13) have an overall length L, wherein the L/D ratio for the overall length L of the kneading elements (13) to the diameter D of the screw shanks lies between 1 and 2.

## Revendications

1. Procédé de préparation d'un polycondensat thermoplastique avec les étapes de procédé suivantes :
- introduction du polycondensat à l'état solide, sous la forme de flocons dans une extrudeuse, avec :
- des arbres de vis sans fin (10) disposés dans un carter, qui s'étendent d'un orifice d'entrée (3) en direction d'un orifice de sortie (8),
- une première zone de transport (11) pour transporter le polycondensat à l'état solide,
- une deuxième zone de transport (12) pour transporter le polycondensat à l'état fondu,
- et au moins un orifice dégazage (14) prévu dans le carter, dans la région de la première zone de transport (11).
- échauffement du polycondensat à une température inférieure au point de fusion et dégazage et/ou séchage du polycondensat à l'état solide sous une pression inférieure à la pression atmosphérique,
- fusion du polycondensat entre la première zone de transport (11) et la deuxième zone de transport (12),
**caractérisé en ce que** les arbres de vis sans fin (10) de l'extrudeuse sont à engrènement serré ; **en ce que** l'échappement de flocons de polycondensat hors de l'extrudeuse (1) est évité au moyen d'un premier dispositif de transport (17) prévu sur l'orifice de dégazage (14), conçu sous la forme d'une vis de transport, **en ce que** le polycondensat est introduit par dosage dans l'extrudeuse (1) sous la forme de flocons, au moyen d'un autre dispositif de transport (5, 6 ; 20), l'épaisseur des flocons étant en moyenne inférieure à 2 mm et leur extension maximale étant inférieure à 20 mm.

2. Procédé selon la revendication 1, **caractérisé en ce que** la fusion du polycondensat entre la première zone de transport (11) et la deuxième zone de transport (12) est assurée au moyen d'éléments de malaxage (13).

3. Procédé selon la revendication 1 ou 2, **caractérisé en ce que** le dégazage et/ou le séchage du polycondensat est assuré sous ajout d'un gaz inerte.

4. Procédé selon l'une quelconque des revendications 1 à 3, **caractérisé en ce que** le polycondensat thermoplastique est du polyester, notamment du polyéthylène téréphtalate ou du polyamide.

5. Procédé selon l'une quelconque des revendications 1 à 4, **caractérisé en ce qu'**on rince le polycondensat à l'état solide avec du gaz inerte.

6. Procédé selon l'une quelconque des revendications 1 à 5, **caractérisé en ce qu'**on expose le polycondensat à une pression inférieure à la pression atmosphérique et/ou au gaz inerte, d'ores et déjà avant l'introduction dans l'extrudeuse.

7. Procédé selon l'une quelconque des revendications 1 à 6, **caractérisé en ce qu'**on réchauffe le polycondensat à une température inférieure à la température de fusion du polycondensat, d'ores et déjà avant l'introduction dans l'extrudeuse.

8. Procédé selon l'une quelconque des revendications 1 à 7, **caractérisé en ce qu'**on ajoute le gaz inerte à une température de 60°C à 250°C, de préférence de 100°C à 160°C.

9. Procédé selon l'une quelconque des revendications 1 à 8, **caractérisé en ce qu'**on procède à un dégazage supplémentaire du polycondensat fondu, après la fusion du polycondensat.

10. Procédé selon la revendication 9, **caractérisé en ce qu'**on procède au dégazage du polycondensat fondu du par adjonction préalable d'un gaz inerte.

11. Procédé selon la revendication 10, **caractérisé en ce qu'**on rajoute le gaz inerte dans un état condensé du polycondensat fondu, sous une pression augmentée, et qu'on abaisse ensuite la pression du polycondensat fondu, pour que le gaz inerte s'échappe du polycondensat fondu.

12. Procédé selon l'une quelconque des revendications 3 à 11, **caractérisé en ce que** le gaz inerte est de l'azote, de l'air séché, du dioxyde de carbone ou un gaz rare.

13. Procédé selon l'une quelconque des revendications 9 à 11, **caractérisé en ce que** le polycondensat fondu est conduit à travers au moins une pompe à matière fondue.

14. Procédé selon l'une quelconque des revendications 9 à 11, **caractérisé en ce que** le polycondensat fondu est conduit à travers au moins un filtre à matière fondue.

15. Procédé selon la revendication 14, **caractérisé en ce que** l'utilisation de filtres à matière fondue est assurée dans le sens de transport du polycondensat, après fusion du polycondensat, de préférence en aval de l'extrudeuse.

16. Procédé selon la revendication 14 ou 15, **caractérisé en ce qu'**à la suite du filtre à matière fondue, on procède à un dégazage supplémentaire du polycondensat.

17. Procédé selon l'une quelconque des revendications 1 à 16, **caractérisé en ce qu'**on introduit des additifs, comme des pigments colorés, des agents de remplissage, des adjuvants de mise en oeuvre, des stabilisateurs, des substances entrant en réaction avec le polycondensat et similaires dans l'extrudeuse (1), parallèlement au polycondensat.

18. Procédé selon la revendication 17, **caractérisé en ce qu'**on modifie la viscosité et/ou la solidité du polycondensat fondu par utilisation d'une substance entrant en réaction avec le polycondensat.

19. Procédé selon la revendication 18, **caractérisé en ce que** la substance entrant en réaction avec le polycondensat augmente la viscosité et/ou la solidité du polycondensat fondu par une réaction d'allongement de chaîne et/ou de réticulation de chaîne avec le polycondensat.

20. Procédé selon l'une quelconque des revendications précédentes, **caractérisé en ce qu'**on procède à une polycondensation supplémentaire sous vide du polycondensat fondu.

21. Procédé selon l'une quelconque des revendications 1 à 20, **caractérisé en ce qu'**on utilise une extrudeuse avec un orifice d'entrée (3) pour l'introduction du polycondensat à préparer à l'état solide, un orifice de sortie (8), pour évacuer le polycondensat à l'état fondu, plus de deux arbres de vis sans fin (10) à engrènement serré, disposés dans le carter (2), le premier dispositif de transport (17) comprenant au moins une vis de transport étant prévu sur l'orifice de dégazage (14), pour transporter du polycondensat pouvant s'échapper par l'intermédiaire de l'orifice de dégazage (14) en retour dans l'extrudeuse (1) et le carter (2) pouvant être chauffé dans la région de la première zone de transport (11), et le carter (2) étant divisé en un carter intérieur (31) et en un carter extérieur (32) et les arbres de vis sans fin (10a à 10l) étant disposés sous forme annulaire entre le carter intérieur (31) et le carter extérieur (32), les arbres de vis sans fin (10a à 10l) séparant un espace extérieur (34) formé entre le carter extérieur (32) et les arbres de vis sans fin d'un espace intérieur (33) formé entre le carter intérieur (31) et les arbres de vis sans fin et dans la région de la première zone de transport (11), pendant sa préparation, le polycondensat se trouvant soit dans l'espace intérieur (33) et l'orifice de dégazage (14) est relié à l'espace extérieur (34) ou pendant sa préparation, le polycondensat se trouvant dans l'espace extérieur (34) et l'orifice de dégazage (14) est relié à l'espace intérieur (33) et le polycondensat étant introduit par dosage dans l'extrudeuse (1) au moyen d'un dispositif de transport (20) prévu sur l'orifice d'entrée (3).

22. Procédé selon la revendication 21, **caractérisé en ce que** le dispositif de transport (17) comporte deux ou plusieurs vis de transport à engrènement serré.

23. Procédé selon la revendication 21 ou 22, **caractérisé en ce qu'**on chauffe le dispositif de transport (17) et/ou le carter entourant le dispositif de transport (17).

24. Procédé selon l'une quelconque des revendications 21 à 23, **caractérisé en ce qu'**on utilise simultanément l'orifice d'entrée (3) en tant qu'orifice de dégazage (14).

25. Procédé selon l'une quelconque des revendications 21 à 24, **caractérisé en ce qu'**on soumet l'orifice de dégazage (14) à une dépression et/ou **en ce qu'**on évacue par l'intermédiaire de l'orifice de dégazage (14) un gaz inerte destiné à des fins de rinçage.

26. Procédé selon la revendication 25, **caractérisé en ce que** le carter (2) comporte dans la région de la première zone de transport (11) au moins un orifice (15, 44), par l'intermédiaire duquel le gaz inerte est alimenté.

27. Procédé selon l'une quelconque des revendications 21 à 26, **caractérisé en ce** les éléments de malaxage utilisés (13) ont une longueur totale L, le rapport L/D de la longueur totale L des éléments de malaxage (13) au diamètre D des arbres de vis sans fin se situant entre 1 et 2.
